# EUROPÄISCHE PATENTSCHRIFT

(11) **EP 1 475 426 B1**
(45) Veröffentlichungstag und Bekanntmachung des Hinweises auf die Patenterteilung: **11.10.2006**
(21) Anmeldenummer: 03009302.5
(22) Anmeldetag: 24.04.2003
(51) Int. Cl.: C09K 3/18, C09D 183/04, C08L 83/04, C08K 3/20

(54) **Verfahren zur Herstellung von ablösbaren schmutz- und wasserabweisenden flächigen Beschichtungen**
Process for the production of removable soil- and water-resistant surface coatings
Procédé de fabrication des revêtements amovibles repoussant à salissure et l'eau

(43) Veröffentlichungstag der Anmeldung: 10.11.2004
(73) Patentinhaber: Goldschmidt GmbH, 45127 Essen (DE)
(72) Erfinder: Müller, Felix, Dr., 42555 Velbert (DE); Nun, Edwin, Dr., 48727 Billerbck (DE); Winter, Patrick, 45289 Essen (DE)

(56) Entgegenhaltungen:
- EP-A- 0 913 447
- EP-A- 0 942 052
- EP-A- 1 245 658
- WO-A-01/22923
- WO-A-94/05731
- PATENT ABSTRACTS OF JAPAN vol. 1995, no. 01, 28. Februar 1995 (1995-02-28) & JP 06 287515 A (TORAY DOW CORNING SILICONE CO LTD), 11. Oktober 1994 (1994-10-11)
- PATENT ABSTRACTS OF JAPAN vol. 2000, no. 07, 29. September 2000 (2000-09-29) & JP 2000 104047 A (SOFT 99 CORPORATION:KK), 11. April 2000 (2000-04-11)
- DATABASE WPI Section Ch, Week 200058 Derwent Publications Ltd., London, GB; Class A26, AN 2000-604367 XP002251405 & JP 2000 191786 A (TOSHIBA SILICONE KK), 11. Juli 2000 (2000-07-11)
- DATABASE WPI Section Ch, Week 199602 Derwent Publications Ltd., London, GB; Class A26, AN 1996-018306 XP002251406 & KR 9 402 567 B (KOREA CHEM CO LTD), 25. März 1994 (1994-03-25)
- PATENT ABSTRACTS OF JAPAN vol. 2003, no. 05, 12. Mai 2003 (2003-05-12) & JP 2003 013007 A (NIPPON UNICAR CO LTD;YUGAKI YOSHIKAZU; KOEI SHIKO:KK), 15. Januar 2003 (2003-01-15)
- DATABASE WPI Section Ch, Week 199517 Derwent Publications Ltd., London, GB; Class A26, AN 1995-126295 XP002251407 & JP 07 048560 A (TOSHIBA SILICONE KK), 21. Februar 1995 (1995-02-21)

## Beschreibung

Gegenstand der vorliegenden Erfindung ist ein Verfahren zur Herstellung von schmutz- und wasserabweisenden flächigen Beschichtungen auf Gegenständen, wobei bei der Beschichtung hydrophobe Partikel auf die Oberfläche der Gegenstände aufgebracht werden und so eine Oberflächenstruktur mit Erhebungen auf der Oberfläche der Gegenstände erzeugt wird, die schmutz-und wasserabweisende Eigenschaften aufweist.

Das Prinzip von selbstreinigenden Beschichtungen ist allgemein bekannt. Zum Erzielen einer guten Selbstreinigung einer Oberfläche muss die Oberfläche neben einer sehr hydrophoben Oberfläche auch eine gewisse Rauhigkeit aufweisen. Eine geeignete Kombination aus Struktur und Hydrophobie macht es möglich, dass schon geringe Mengen bewegten Wassers auf der Oberfläche haftende Schmutzpartikel mitnehmen und die Oberfläche reinigen (WO-A-96/04123; US 3,354,022).

Stand der Technik ist gemäß EP-B-0 933 388, dass für solche selbstreinigenden Oberflächen ein Aspektverhältnis von > 1 und eine Oberflächenenergie von weniger als 20 mN/m erforderlich ist. Das Aspektverhältnis ist hierbei definiert als der Quotient von Höhe zur Breite der Struktur. Vorgenannte Kriterien sind in der Natur, beispielsweise im Lotusblatt, realisiert. Die aus einem hydrophoben wachsartigen Material gebildete Oberfläche der Pflanze weist Erhebungen auf, die einige µm voneinander entfernt sind. Wassertropfen kommen im Wesentlichen nur mit den Spitzen der Erhebungen in Berührung. Solche wasserabstoßenden Oberflächen werden in der Literatur vielfach beschrieben.

CH-268258 beschreibt ein Verfahren, bei dem durch Aufbringen von Pulvern wie Kaolin, Talkum, Ton oder Silicagel strukturierte Oberflächen erzeugt werden. Die Pulver werden durch Öle und Harze auf Basis von Organosiliziumverbindungen auf der Oberfläche fixiert (Beispiele 1 bis 5).

EP-A-0 909 747 lehrt ein Verfahren zur Erzeugung einer selbstreinigenden Oberfläche. Die Oberfläche weist hydrophobe Erhebungen mit einer Höhe von 5 bis 200 µm auf. Hergestellt wird eine derartige Oberfläche durch Aufbringen einer Dispersion von Pulverpartikeln und einem inerten Material in einer Siloxan-Lösung und anschließendem Aushärten. Die strukturbildenden Partikel werden also durch ein Hilfsmedium am Substrat fixiert.

WO-A-00/58410 kommt zu dem Ergebnis, dass es technisch möglich ist, Oberflächen von Gegenständen künstlich selbstreinigend zu machen. Die hierfür nötigen Oberflächenstrukturen aus Erhebungen und Vertiefungen haben einen Abstand zwischen den Erhebungen der Oberflächenstrukturen im Bereich von 0,1 bis 200 µm und eine Höhe der Erhebung im Bereich 0,1 bis 100 µm. Die hierfür verwendeten Materialien müssen aus hydrophoben Polymeren oder dauerhaft hydrophobiertem Material bestehen. Ein Lösen der Teilchen aus der Trägermatrix muss verhindert werden.

Der Einsatz von hydrophoben Materialien, wie perfluorierten Polymeren, zur Herstellung von hydrophoben Oberflächen ist bekannt. Eine Weiterentwicklung dieser Oberflächen besteht darin, die Oberflächen im µm-Bereich bis nm-Bereich zu strukturieren. US 5,599,489 offenbart ein Verfahren, bei dem eine Oberfläche durch Beschuss mit Partikeln einer entsprechenden Größe und anschließender Perfluorierung besonders abweisend ausgestattet werden kann. Ein anderes Verfahren beschreibt H.

Saito et al. in "Service Coatings International", 4, 1997, S. 168 ff. Hier werden Partikel aus Fluorpolymeren auf Metalloberflächen aufgebracht, wobei eine stark erniedrigte Benetzbarkeit der so erzeugten Oberflächen gegenüber Wasser mit einer erheblich reduzierten Vereisungsneigung dargestellt wurde.

Das Prinzip ist der Natur entlehnt. Kleine Kontaktflächen erniedrigen die Van-der Waal's Wechselwirkung, die für die Haftung an ebenen Oberflächen mit niedriger Oberflächenenergie verantwortlich ist. Beispielsweise sind die Blätter der Lotuspflanze mit Erhebungen aus einem Wachs versehen, die die Kontaktfläche zu Wasser herabsetzen.

Verfahren zur Herstellung dieser strukturierten Oberflächen sind ebenfalls bekannt. Neben der detailgetreuen Abformung dieser Strukturen durch eine Masterstruktur im Spritzguss oder Prägeverfahren sind auch Verfahren bekannt, die das Aufbringen von Partikeln auf eine Oberfläche nutzen (US 5 599 489).

In neuerer Zeit ist versucht worden, selbstreinigende Oberflächen auch auf Textilien bereitzustellen. Es wurde gefunden, dass durch Aufbringen von hochdispersem SiO₂ (Aerosilen) auf Textilien selbstreinigende Oberflächen erzeugt werden können. Die Aerosile werden hierbei mit einem Lösungsmittel in die Polymermatrix der Textilfaser eingebunden.

In der DE-A-101 18 348 werden Polymerfasern mit selbstreinigenden Oberflächen beschrieben, bei denen die selbstreinigende Oberfläche durch Einwirken eines Lösemittels, welches strukturbildende Partikel aufweist, Anlösen der Oberfläche der Polymerfasern durch das Lösemittel, Anheften der strukturbildenden Partikel an die angelöste Oberfläche und Entfernen des Lösemittels, erhalten wird. Der Nachteil dieses Verfahrens besteht darin, dass beim Verarbeiten der Polymerfasern (Spinnen, Stricken etc.) die strukturbildenden Partikel und damit die Struktur, welche die selbstreinigende Oberfläche bewirkt, beschädigt oder unter Umstanden sogar ganz verloren gehen können und damit der Selbstreinigungseffekt ebenfalls verloren geht.

JP 06 287515 A offenbart ein Siliconharz, enthaltend ein Polyorganosiloxan, ein Kieselsäurepulver und Octramethylcyclotetrasiloxan als Lösemittel. Das Gemisch wird als wasser- und schmutzabweisendes Beschichtungsmittel eingesetzt.

JP 2000 104047 A offenbart eine Beschichtungszusammensetzung, enthaltend Dimethylpolysiloxan mit einer Viskosität von 0,65 bis 1000000 cSt, hydrophobe Kieselsäure, hydrophile Kieselsäure, und Petroleum. Die Beschichtungszusammensetzung wird als wasserabweisendes Mittel für Automobile eingesetzt.

JP 2000 191786 A offenbart eine wasserabweisende Beschichtung, enthaltend kolloide Kieselsäure und Siliconharz und ihre Verwendung als Faserbehandlungsmittel oder Beschichtungsmittel für Wände und Gebäude.

In DE-A-101 18 346 werden textile Flächengebilde mit selbstreinigender und wasserabweisender Oberfläche, aufgebaut aus mindestens einem synthetischen und/oder natürlichen textilen Basismaterial A und einer künstlichen, mindestens teilweise hydrophoben Oberfläche mit Erhebungen und Vertiefungen aus Partikeln, die ohne Klebstoffe, Harze oder Lacke mit dem Basismaterial A fest verbunden sind, beschrieben, die durch Behandlung des Basismaterials A mit zumindest einem Lösemittel, welches die Partikel ungelöst enthält, und Entfernen des Lösemittels, wobei zumindest ein Teil der Partikel mit der Oberfläche des Basismaterials A fest verbunden werden, erhalten werden. Der Nachteil dieses Verfahrens beruht allerdings auf einer sehr aufwendigen Veredelung der Textiloberflächen. Bei diesem Prozess ist es nötig, dass das Lösungsmittel genau auf das Basismaterial der Textilien abgestimmt werden muss. Bei Kleidungsstücken liegen in der Regel aber Mischgewebe vor, wodurch diese Abstimmung zusätzlich kompliziert wird. Bei ungenauer Abstimmung der Lösungsmittel kann es zur Zerstörung von Teilen des Kleidungsstückes kommen. Eine Behandlung der textilen Oberflächen ist also vor dem Schneidern nötig.

All diese Beschichtungen haben den Nachteil, dass sie permanent auf die Gegenstände aufgebracht sind und damit bei einem Verkratzen, einer Verfärbung oder einer andersartigen Beschädigung der Oberfläche bzw. Oberflächenstruktur diese nicht einfach entfernt und wieder neu aufgebracht werden kann. Bei einer solchen Beschädigung muss der Gegenstand entweder erneut behandelt, aufwendig von der Oberflächenstruktur befreit oder entsorgt werden.

WO-A-00/58410 beschreibt ein Verfahren zur Herstellung von ablösbaren Beschichtungen mit schmutz- und wasserabweisenden Eigenschaften, wobei die selbigen durch Aufsprühen von hydrophoben Alkoholen, wie Nonacosan-10-diol oder Alkandiolen, wie Nonacosan-5,10-diol oder Wachsen hergestellt werden. Diese Beschichtungen sind durch starke mechanische Kräfte wie z. B. Kratzen, Bürsten oder Hochdruckbehandlung mit Wasser oder durch eine Behandlung mit Wasser, welches Detergenzien enthält, die einen Teil der Strukturbildner auflösen, von den Gegenständen zu entfernen. Nachteilig hieran sind die starken Kräfte die notwendig sind, um die Beschichtung mechanisch wieder zu entfernen, so dass immer die Gefahr besteht, dass beim Entfernen der Beschichtung auch der Gegenstand selbst beschädigt wird. Eine Behandlung mit Wasser, welches Detergenzien enthält, kann ebenfalls je nach Beschaffenheit des Gegenstandes zur Beschädigung des selben führen.

In DE-A-101 35 157 wird ein Verfahren zur Beschichtung von Textilien während eines chemischen Reinigungsvorgangs beschrieben, bei dem strukturbildende Partikel dem Reinigungsmittel zugegeben werden. Als Reinigungsmittel werden relativ aggressive organische Lösungsmittel, wie z. B. Trichlorethylen vorgeschlagen, deren Verwendung zu einer mechanischen Verankerung der Partikel an der Struktur der Textilien führt, was zur Beschädigung des zu beschichtenden Gegenstands führen kann.

Aufgabe der vorliegenden Erfindung war es deshalb ein Verfahren zur Herstellung von schmutz- und wasserabweisenden, flächigen Beschichtungen auf Gegenständen bereitzustellen, bei welchem auch Gegenstände aus empfindlichen Materialien mit einer relativ stabilen aber mit einfachen Mitteln abzulösenden Beschichtung ausgerüstet werden können.

Überraschenderweise wurde gefunden, dass durch Aufbringen von Suspensionen, die hydrophobe Partikel in einer Lösung eines Siliconwachses in einem leicht flüchtigen Siloxan enthalten, auf zumindest eine Oberfläche eines Gegenstandes und anschließendes Entfernen des leicht flüchtigen Siloxans Beschichtungen mit schmutz- und wasserabweisenden Eigenschaften erhalten werden können, die relativ stabil sind, aber auch mit einfachen Mitteln wieder entfernt werden können.

Gegenstand der vorliegenden Erfindung ist deshalb ein Verfahren zur Herstellung von ablösbaren schmutz- und wasserabweisenden flächigen Beschichtungen auf Gegenständen, wobei bei der Beschichtung hydrophobe Partikel auf die Oberfläche der Gegenstände aufgebracht werden und so eine Oberflächenstruktur mit Erhebungen auf der Oberfläche der Gegenstände erzeugt wird, die schmutz- und wasserabweisende Eigenschaften aufweist, welches dadurch gekennzeichnet ist, dass die hydrophoben Partikel in einer Lösung eines Siliconwachses in mindestens einem leicht flüchtigen Siloxan der allgemeinen Formel (I) und/oder cyclische Verbindungen der allgemeinen Formel (Ia) 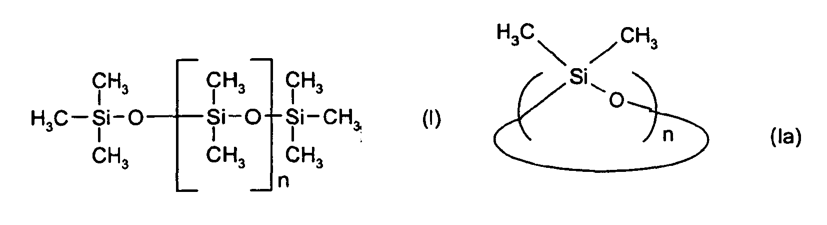 worin
- n: eine Zahl von 2 bis 10 bedeutet, vorzugsweise für die linearen Verbindungen 2 bis 5 und vorzugsweise für die cyclischen Verbindungen > 4, besonders > 5 (wie D5 = Decamethylpentacyclosiloxan) und/oder ≥ 6 bis ca. ≤ 8, ist, suspendiert werden und diese Suspension auf zumindest eine Oberfläche eines Gegenstandes aufgebracht und das leicht flüchtige Siloxan anschließend entfernt wird.

Cyclische und lineare Siloxane können in Mischung untereinander, vorzugsweise aber in Mischung miteinander verwendet werden.

Ebenso sind Gegenstand der vorliegenden Erfindung Gegenstände, die auf zumindest einer Oberfläche mit einer wasser- und schmutzabweisenden Beschichtung hergestellt nach einem Verfahren gemäß zumindest einem der Ansprüche 1 bis 5 ausgerüstet sind.

Außerdem ist Gegenstand der vorliegenden Erfindung eine nicht permanente Schutzbeschichtung mit wasser- und schmutzabweisenden Eigenschaften für Gegenstände, wobei die Schutzbeschichtung durch einfache Art und Weise wieder vom Gegenstand entfernt werden kann.

Im Übrigen ist Gegenstand der vorliegenden Erfindung die Verwendung des Verfahrens gemäß einem der Ansprüche 1 bis 7 zur Beschichtung von Gegenständen, die hohen Belastungen durch Schmutz und Wasser ausgesetzt sind, insbesondere für den Outdoor-Bereich, Sportbereich wie beispielsweise Ski-Sport, Motor-Sport, Segelsport; zur Beschichtung von Textilien, wie Zelten, Markisen, Regenschirmen, Tischdecken, Cabrio-Verdecken, technischen Textilien oder Arbeitskleidung sowie die Verwendung des Verfahrens gemäß einem der Ansprüche 1 bis 7 in Imprägniersprays.

Die vorliegende Erfindung beschreibt ein Verfahren, mit dem ablösbare, schmutz- und wasserabweisende Beschichtungen hergestellt werden können.

Die Erfindung hat den Vorteil, dass auf einfache Art und Weise Gegenstände aller Art mit einer schmutz- und wasserabweisenden nicht permanenten Schicht ausgerüstet werden können.

Im Gegensatz zu Verfahren gemäß dem Stand der Technik ist die erfindungsgemäße Beschichtung mit einer ablösbaren schmutzabweisenden Schicht relativ schonend, da keine bedenklichen oder aggressiven Lösungsmittel eingesetzt werden und da das Ablösen der Beschichtung beispielsweise mechanisch wie durch Reiben erfolgen kann.

Die mittels des erfindungsgemäßen Verfahrens hergestellte Beschichtung ist nicht permanent und eignet sich deshalb besonders gut als Schutzbeschichtung von neuen Gegenständen vor Verschmutzung, z. B. beim Transport oder in den Verkaufsräumen.

Das Verfahren zur Herstellung von ablösbaren, schmutz- und wasserabweisenden flächigen Beschichtungen auf Gegenständen, wobei bei der Beschichtung hydrophobe Partikel auf die Oberfläche der Gegenstände aufgebracht werden und so eine Oberflächenstruktur mit Erhebungen auf der Oberfläche der Gegenstände erzeugt wird, die schmutz- und wasserabweisende Eigenschaften aufweist, zeichnet sich dadurch aus, dass hydrophobe Partikel in einer Lösung eines Siliconwachses in einem leicht flüchtigen Silicon suspendiert werden und diese Suspension auf zumindest eine Oberfläche eines Gegenstandes aufgebracht und das leicht flüchtige Silicon anschließend entfernt wird.

Als Siliconwachse sind alle bei Raumtemperatur flüssigen Verbindungen einsetzbar, d.h. einen Rekristallisationspunkt unterhalb Raumtemperatur von ca. 20 °C, vorzugsweise < 15 °C, insbesondere < 5 °C haben, insbesondere solche der allgemeinen Formel (II) 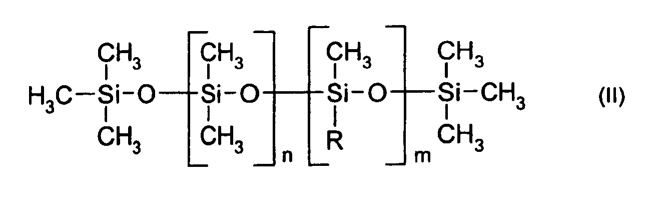 worin bedeuten
- R: ein Kohlenwasserstoffrest, vorzugsweise mit 10 bis 20 C-Atomen,
- n: 2 bis 85,
- m: 2 bis 60.
Das Aufbringen der Suspension auf zumindest eine Oberfläche eines Gegenstandes kann auf eine dem Fachmann bekannte Weise erfolgen. Vorzugsweise erfolgt das Aufbringen der Suspension durch Tauchen des Gegenstandes in die Suspension und anschließendes Abtropfen oder durch Aufsprühen der Suspension auf den Gegenstand. Überraschenderweise können insbesondere durch das Aufbringen der Suspension durch Aufsprühen besonders haltbare Beschichtungen, die eine geringere Kratz- und Abriebempfindlichkeit aufweisen- insbesondere auf Polymeroberflächen, erzeugt werden.

Beim Sprühvorgang lagern sich die Teilchen aufgrund ihrer kinetischen Energie noch fester in die vorhandenen Oberflächenrauhigkeiten der Polymermatrix ein. Vorzugsweise erfolgt das Aufsprühen der Suspension mittels einer Sprühvorrichtung, die eine Düse mit einem Durchmesser von 0,05 bis 2 mm, bevorzugt mit einem Durchmesser von 0,1 bis 0,9 mm, aufweist. Das Versprühen der Suspension erfolgt bevorzugt mit einem Druck von 1 bis 5 bar.

Das Entfernen des flüchtigen Silicons erfolgt durch Verdampfung bzw. Verflüchtigung, wobei das Verdampfen bzw. Verflüchtigen durch den Einsatz erhöhter Temperaturen oder durch den Einsatz von Unterdruck bzw. Vakuum beschleunigt werden kann.

Als Partikel können solche eingesetzt werden, die zumindest ein Material, ausgewählt aus Silicaten, Mineralien, Metalloxiden, Metallpulvern, Kieselsäuren, Pigmenten oder Polymeren aufweisen. Besonders bevorzugt können die Partikel Silicate, dotierte Silicate, Mineralien, Metalloxide, Aluminiumoxid, Kieselsäuren oder pyrogene Silicate, Aerosile oder pulverförmige Polymere, wie z. B. sprühgetrocknete und agglomerierte Emulsionen oder cryogemahlenes PTFE (Teflon) sein. Besonders bevorzugt werden als hydrophobe Partikel hydrophob beschichtete Kieselsäuren eingesetzt.

Die hydrophoben Eigenschaften der Partikel können durch das verwendete Material der Partikel inhärent vorhanden sein, wie beispielsweise beim Polytetrafluorethylen (PTFE). Es können aber auch hydrophobe Partikel eingesetzt werden, die nach einer geeigneten Behandlung hydrophobe Eigenschaften aufweisen, wie z. B. mit zumindest einer Verbindung aus der Gruppe der Alkylsilane, der Fluoralkylsilane oder der Disilazane behandelte Partikel. Als Partikel eignen sich im Besonderen hydrophobierte pyrogene Kieselsäuren, sogenannte Aerosile. Beispiel für hydrophobe Partikel sind z. B. das Aerosil® R 812S oder Aerosil® R 8200.

Die mittels des erfindungsgemäßen Verfahrens hergestellten Oberflächen weisen vorzugsweise einen Randwinkel (Circle Fitting) für Wasser von > 100 °, bevorzugt > 115 °, besonders bevorzugt > 125 ° und ganz besonders bevorzugt > 130 ° auf. Die Circle Fitting Methode mit dem Krüss-Gerät DSA 10 ergibt niedrigere Werte in absoluten Zahlen als klassisches Testverfahren, ermöglicht aber durch die zusätzliche dynamische Auswertung eine bessere Bewertung der Qualität einer Beschichtung.

Die erfindungsgemäßen Beschichtungen lassen sich auf einfache Weise durch mechanische Bearbeitung z. B. Reiben, Polieren oder Hochdruckreiniger (Wasser) wieder von dem beschichteten Gegenstand ablösen, haften jedoch so fest auf den Untergründen, dass ihre erfindungsgemäßen Gebrauchseigenschaften über einen praxisgerechten Zeitraum gegeben sind.

Mittels des erfindungsgemäßen Verfahrens können Gegenstände, die auf zumindest einer Oberfläche mit einer wasser- und schmutzabweisenden Beschichtung ausgerüstet sind, hergestellt werden. Die Gegenstände bzw. die zu beschichtenden Oberflächen können aus den unterschiedlichsten Stoffen, wie z. B. Metall, Kunststoff, Polymer, Holz, Keramik oder Glas bestehen.

Das erfindungsgemäße Verfahren kann außerdem in Imprägniersprays Verwendung finden.

Mit solchen Sprays lassen sich z. B. Gartenmöbel, Autofelgen, Autolacke, Duschen, Fliesen, Flächen im Sanitärbereich allgemein, Waschküchen und ähnliches mit ablösbaren schmutz- und wasserabweisenden Beschichtungen ausrüsten.

Das erfindungsgemäße Verfahren sowie seine Verwendung wird im Folgenden beispielhaft beschrieben, ohne dass die Erfindung darauf beschränkt sein soll.

### Testverfahren:

### Beschichtung der Oberflächen:

Die Beschichtung der Oberflächen geschieht durch Aufsprühen der Suspensionen mit einer Vollkegelspritzdüse, z.B. vom Typ GSC-1 von der Firma Spraying-Systems GmbH. Dazu wird eine Menge von 1,5 g der Suspension in ein Reagenzglas eingewogen und diese mittels Gummischlauch von der Düse angesogen und auf die Oberfläche gesprüht. Die Oberfläche wird vor und nach dem Besprühen gewogen um somit die Masse der aufgebrachten Schichtdicke zu bestimmen.

### Bestimmung des Kontaktwinkels:

Die Bestimmung des Kontaktwinkels erfolgte mit einem Gerät Typ DSA 10 der Firma Krüss GmbH. Hierzu wurde ein Tropfen destilliertes Wasser mit einem Volumen von 7 µl auf die Oberfläche aufgebracht und dieser mit einer Highspeed Kamera aufgenommen. Die Auswertung erfolgte mittels Software DSA Version 1.80.1.2 [HS] nach der "circle fitting"-Methode.

### Bestimmung des Glanzwertes:

Die Bestimmung des Glanzwertes erfolgte mit einem Gerät Typ REFO 3-D der Firma Lange GmbH. Hierzu wurde der Glanzwert an drei verschiedenen Punkten der Oberfläche mittels Dreiwinkelmessung (20 °, 60 °, 85 °) gemessen. Der Mittelwert aus diesen Messungen repräsentiert den Glanz der gesamten Oberfläche wobei 1 = sehr hoher Glanz und 6 = matte Oberfläche bedeuten.

### Abrollverhalten:

Die Oberflächenneigung des beschichteten Substrats betrug 45 °. 1 = sofortiges, widerstandsloses und rückstandsfreies Abrollen eines aufgebrachten ca. 500 µl großen Wassertropfens, 6 = Spreitung des Tropfens, d.h. kein Abrolleffekt sondern Verdunsten.

### Verzögerung der Penetration:

1 = keine Penetration, 6 = keinerlei Verzögerung, sofortige Penetration.

### Erscheinungsbild:

Sensorischer Gesamteindruck des Erscheinungsbildes. 1 = die Oberfläche wirkt unbehandelt und unbelastet, 6 = sowohl Beschichtung als auch Belastung sind ausgeprägt wahrnehmbar d.h. werden als störend empfunden.

### Gesamtnote:

Ist der arithmetische Mittelwert der beurteilten Kriterien. Je geringer der Wert, um so positiver ist der Gesamteindruck.

### Durchführung:

### Beispiel 1 (Vergleich):

Gemäß EP-A-1 153 987 wurden 0,5 g Polyoctadecylvinylether mit einem Molekulargewicht von ca. 3.000 g/Mol (Lutonal® A25) in 98,5 g Petroleumbenzin (Siedebereich 90 bis 100 °C) gelöst. In diese Lösung wurden unter intensivem Rühren 1,0 g einer handelsüblichen, hydrophobierten pyrogenen Kieselsäure mit einer BET-Oberfläche von 220 m²/g (Aerosil® R 812 S, im folgenden R 812 S) dispergiert.

Diese Suspension ergab auf weißen glasierten Fliesen einen Kontaktwinkel von 130 ° und einen Glanzwert von 0,9 bei 85 °.

### Beispiel 2:

0,5 g Siloxanwachs (Tegopren® 6814, im folgenden TP 6814) mit einem Molekulargewicht von 13.000 g/Mol und einem Rekristallisationspunkt von < 5 °C wurden in 98,5 g Decamethylcyclopentasiloxan (D5) gelöst. In diese Lösung dispergierte man unter intensivem Rühren 1,0 g einer handelsüblichen, hydrophobierten pyrogenen Kieselsäure mit einer BET-Oberfläche von 220 m²/g, (Aerosil® R 812 S) .

Diese Suspension ergab auf weißen glasierten Fliesen einen Kontaktwinkel von 130 ° und einen Glanzwert von 15,0 bei 85 °.

### Beispiel 3:

0,5 g Siloxanwachs (Tegopren® 6814) mit einem Molekulargewicht von 13.000 g/Mol und einem Rekristallisationspunkt von < 5 °C wurden in 98,5 g Decamethylcyclopentasiloxan (D5) gelöst. In diese Lösung dispergierte man unter intensivem Rühren 1,0 g einer handelsüblichen, hydrophobierten pyrogenen Kieselsäure mit einer BET-Oberfläche von 160 m²/g, (Aerosil® R 8200, im folgenden R 8200).

Diese Suspension ergab auf weißen glasierten Fliesen einen Kontaktwinkel von 105 ° und einen Glanzwert von 56,1 bei 60 °.

### Beispiel 4:

0,5 g Siloxanwachs (Tegopren® 6814) mit einem Molekulargewicht von 13.000 g/Mol und einem Rekristallisationspunkt von < 5 °C wurden in 97,5 g Decamethylcyclopentasiloxan (D5) gelöst. In diese Lösung dispergierte man unter intensivem Rühren 2,0 g einer handelsüblichen, hydrophobierten pyrogenen Kieselsäure mit einer BET-Oberfläche von 220 m²/g, (Aerosil® R 812 S) .

Diese Suspension ergab auf weißen glasierten Fliesen einen Kontaktwinkel von 133 ° und einen Glanzwert von 11,7 bei 85 °.

### Beispiel 5:

0,5 g Siloxanwachs (Tegopren® 6814) mit einem Molekulargewicht von 13.000 g/Mol und einem Rekristallisationspunkt von < 5 °C wurden in 97,5 g Decamethylcyclopentasiloxan (D5) gelöst. In diese Lösung dispergierte man unter intensivem Rühren 2,0 g einer handelsüblichen, hydrophobierten pyrogenen Kieselsäure mit einer BET-Oberfläche von 160 m²/g, (Aerosil® R 8200).

Diese Suspension ergab auf weißen glasierten Fliesen einen Kontaktwinkel von 106 ° und einen Glanzwert von 42,2 bei 60 °.

| **Oberfläche** | **Beurteilungs- Kriterien** | **Beispiel 1** | **Beispiel 2** | **Beispiel 3** | **Beispiel 4** | **Beispiel 5** |
|---|---|---|---|---|---|---|
| | | Petroleumbenzin + 0,5 % Lutonal A25 + 1,0 % R 812 S | + 0,5 % Tp 6814 + 1,0 % R 812 S ad 100 % D5 | + 0,5 % Tp 6814 + 1,0 % R 8200 ad 100 % D5 | + 0,5 % Tp 6814 + 2,0 % R 812 S ad 100 % D5 | + 0,5 % Tp 6814 + 2,0 % R 8200 ad 100 % D5 |
| **Lackiertes Blech** | Abrollverhalten von Wassertropfen | 2 | 1 | 4 | 1 | 2 |
| | Erscheinungsbild | 6 | 6 | 3 | 6 | 2 |
| | Glanz | 6 | 6 | 3 | 6 | 3 |
| | **Gesamtnote** | **4,7** | **4,3** | **3,3** | **4,3** | **2,3** |
| **Glasierte Fliese** | Abrollverhalten von Wassertropfen | 2 | 1 | 4 | 1 | 3 |
| | Erscheinungsbild | 5 | 5 | 3 | 5 | 3 |
| | Glanz | 6 | 6 | 2 | 6 | 3 |
| | **Gesamtnote** | **4,3** | **4,0** | **3,0** | **4,0** | **3,0** |
| **Feinsteinzeug Fliese** | Abrollverhalten von Wassertropfen | 3 | 1 | 4 | 1 | 2 |
| | Erscheinungsbild | 5 | 4 | 1 | 4 | 2 |
| | **Gesamtnote** | **4,0** | **2,5** | **2,5** | **2,5** | **2,0** |
| **Glas** | Abrollverhalten von Wassertropfen | 4 | 1 | 4 | 1 | 2 |
| | Erscheinungs-bild | 6 | 6 | 2 | 6 | 3 |
| | Transparenz | 6 | 5 | 2 | 6 | 3 |
| | **Gesamtnote** | **5,3** | **4,0** | **2,7** | **4,3** | **2,7** |
| **Leder** (**Naturbelassen**) | Abrollverhalten von Wassertropfen | 1 | 1 | 4 | 1 | 2 |
| | Erscheinungsbild | 6 | 3 | 2 | 5 | 1 |
| | Verzögerung des Einpenetrieren von Wasser | 4 | 3 | 4 | 2 | 3 |
| | **Gesamtnote** | **3,7** | **2,3** | **3,3** | **2,7** | **2,0** |

Die vorliegende Tabelle zeigt deutlich, dass es durch Variierung des Verhältnisses von Aerosil zu Haftvermittler möglich ist, die für die jeweilige Anwendung günstigste Suspension herzustellen. Auf jeder geprüften Oberfläche zeigt sich jedoch durch den Einsatz eines Haftvermittlers auf Basis Siliconwachs eine erhebliche Verbesserung gegenüber dem Stand der Technik.

## Patentansprüche

1. Verfahren zur Herstellung von ablösbaren schmutz- und wasserabweisenden flächigen Beschichtungen auf Gegenständen, wobei bei der Beschichtung hydrophobe Partikel auf die Oberfläche der Gegenstände aufgebracht werden und so eine Oberflächenstruktur mit Erhebungen auf der Oberfläche der Gegenstände erzeugt wird, die schmutz- und wasserabweisende Eigenschaften aufweist, **dadurch gekennzeichnet, dass** die hydrophoben Partikel in einer Lösung eines Silikonwachses in mindestens einem leicht flüchtigen Siloxan der allgemeinen Formel (I) und/oder cyclische Verbindungen der allgemeinen Formel (Ia) 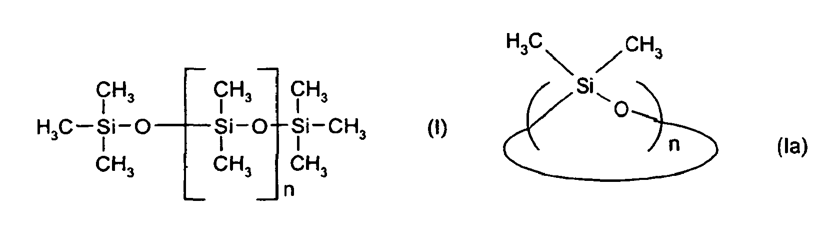 worin
n eine Zahl von 2 bis 10 bedeutet, vorzugsweise für die linearen Verbindungen 2 bis 5 und vorzugsweise für die cyclischen Verbindungen ≥ 4 bis ≤ 8 bedeutet,
suspendiert werden und diese Suspension auf zumindest eine Oberfläche eines Gegenstandes aufgebracht und das leicht flüchtige Siloxan anschließend entfernt wird.

2. Verfahren gemäß Anspruch 1, **dadurch gekennzeichnet, dass** als Siliconwachs mindestens eine Verbindung der allgemeinen Formel (II) 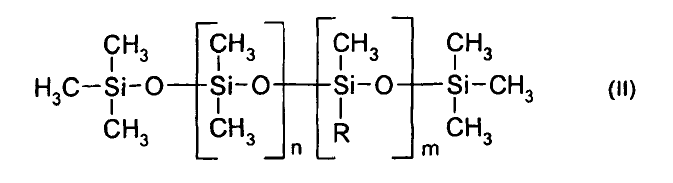 worin bedeuten
R ein Kohlenwasserstoffrest, vorzugsweise mit 10 bis 20 C-Atomen,
n 2 bis 85,
m 2 bis 60 und deren Rekristallisationspunkte unterhalb ca. 20 °C liegen, eingesetzt wird.

3. Verfahren nach mindestens einem der Ansprüche 1 bis 2, **dadurch gekennzeichnet, dass** das Aufbringen der Suspension auf zumindest eine Oberfläche eines Gegenstandes durch Aufsprühen der Suspension auf den Gegenstand erfolgt.

4. Verfahren gemäß einem der Ansprüche 1 bis 3, **dadurch gekennzeichnet, dass** Partikel, die einen mittleren Partikeldurchmesser von 0,02 bis 100 µm aufweisen, eingesetzt werden.

5. Verfahren nach Anspruch 4, **dadurch gekennzeichnet, dass** Partikel, ausgewählt aus hydophobierten Kieselsäuren, Zinkoxid und/oder Titandioxid eingesetzt werden.

6. Verwendung von hydrophoben, in einer Lösung eines Siliconwachses in einem leicht flüchtigen Siloxan suspendierten Partikel, zur wasser- und schmutzabweisenden Ausrüstung von Oberflächen.

7. Verwendung von hydrophoben, in einer Lösung eines Siliconwachses in einem leicht flüchtigen Siloxan suspendierten Partikel, als Imprägniermittel.

8. Gegenstände, die auf zumindest einer Oberfläche mit einer wasser- und schmutzabweisenden Beschichtung hergestellt nach einem Verfahren gemäß zumindest einem der Ansprüche 1 bis 5 ausgerüstet sind.

## Claims

1. Process for producing detachable dirt- and water-repellent surface coatings on articles, where, during the coating process, hydrophobic particles are applied to the surface of the articles, thus generating a surface structure with elevations on that surface of the articles which has dirt- and water-repellent properties, which comprises suspending the hydrophobic particles in a solution of a silicone wax in at least one highly volatile siloxane of the general formula (I) and/or cyclic compounds of the general formula (Ia) 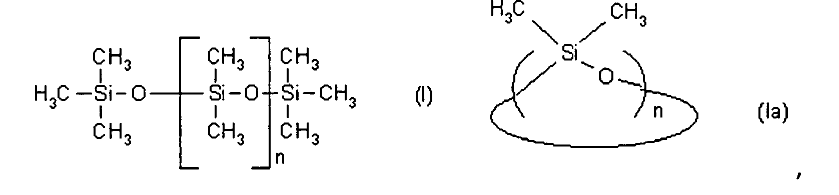 where
n is a number from 2 to 10, and for the linear compounds is preferably from 2 to 5, and for the cyclic compounds is preferably from ≥ 4 to ≤ 8.
and applying this suspension to at least one surface of an article, and then removing the highly volatile siloxane.

2. Process according to Claim 1, **characterized in that** the silicone wax used comprises at least one compound of the general formula (II) 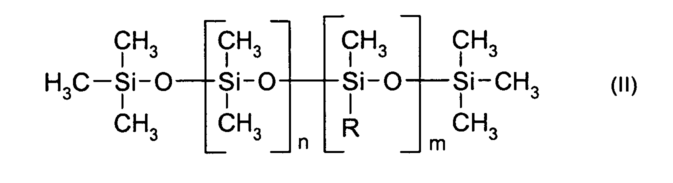 where
R is a hydrocarbon radical, preferably having from 10 to 20 carbon atoms,
n is from 2 to 85,
m is from 2 to 60, the recrystallization points of these compounds being below about 20°C.

3. Process according to at least one of Claims 1 to 2, wherein the suspension is applied to at least one surface of an article by spray-application of the suspension onto the article.

4. Process according to any of Claims 1 to 3,
**characterized in that** use is made of particles whose average particle diameter is from 0.02 to 100 µm.

5. Process according to Claim 6, **characterized in that** use is made of particles selected from hydrophobicized silicas, zinc oxide, and/or titanium dioxide.

6. Use of hydrophobic particles suspended in a solution of a silicone wax in a highly volatile siloxane, for treating surfaces to make them water- and dirt-repellent.

7. Use of hydrophobic particles suspended in a solution of a silicone wax in a highly volatile siloxane, as an impregnating composition.

8. Article of which at least one surface has been treated with a water- and dirt-repellent coating produced by a process according to at least one of Claims 1 to 5.

## Revendications

1. Procédé de préparation de revêtements plats, repoussant les salissures et l'eau, amovibles sur des objets, des particules hydrophobes étant appliquées sur la surface des objets lors du revêtement et produisant ainsi une structure superficielle avec des élévations sur la surface des objets, qui présente des propriétés de répulsion de salissures et d'eau, **caractérisé en ce que** les particules hydrophobes sont mises en suspension dans une solution d'une cire de silicone dans au moins un siloxane très volatil de formule générale (I) et/ou des composés cycliques de formule générale (Ia) 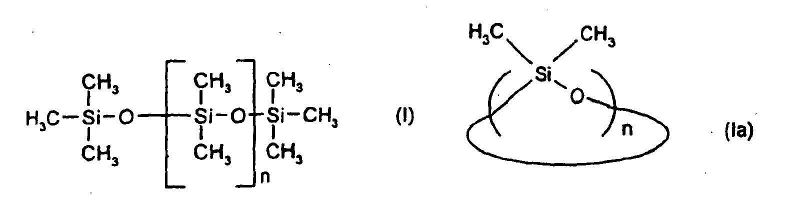 dans laquelle
n signifie un nombre de 2 à 10, de préférence 2 à 5 pour les composés linéaires et de préférence ≥ 4 à ≤ 8 pour les composés cycliques,
et cette suspension est appliquée sur au moins une surface d'un objet et le siloxane très volatil est ensuite éliminé.

2. Procédé selon la revendication 1, **caractérisé en ce qu'**on utilise comme cire de silicone au moins un composé de formule générale (II) 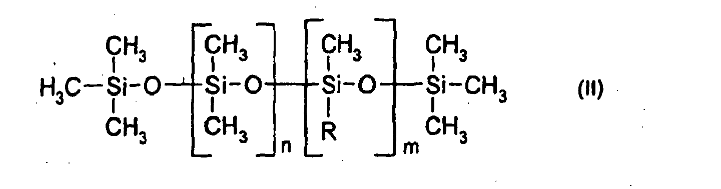 dans laquelle
R signifie un radical hydrocarboné, comprenant de préférence 10 à 20 atomes de carbone,
n signifie 2 à 85,
m signifie 2 à 60 et dont le point de recristallisation est inférieur environ à 20°C.

3. Procédé selon au moins l'une des revendications 1 à 2, **caractérisé en ce que** l'application de la suspension est réalisée sur au moins une surface d'un objet par pulvérisation de la suspension sur l'objet.

4. Procédé selon l'une quelconque des revendications 1 à 3, **caractérisé en ce qu'**on utilise des particules qui présentent un diamètre moyen des particules de 0,02 à 100 µm.

5. Procédé selon la revendication 4, **caractérisé en ce qu'**on utilise des particules qui sont choisies parmi les silices hydrofugées, l'oxyde de zinc et/ou l'oxyde de titane.

6. Utilisation de particules hydrophobes, mises en suspension dans une solution d'une cire de silicone dans un siloxane très volatil, pour l'apprêt repoussant l'eau et les salissures de surfaces.

7. Utilisation de particules hydrophobes, mises en suspension dans une solution d'une cire de silicone dans un silicone très volatil, comme agent d'imprégnation.

8. Objets qui sont apprêtés sur au moins une surface avec un revêtement repoussant l'eau et les salissures préparé selon un procédé selon au moins l'une quelconque des revendications 1 à 5.
